# EUROPÄISCHE PATENTANMELDUNG

(11) **EP 1 491 519 A1**
(43) Veröffentlichungstag der Anmeldung: **29.12.2004**
(21) Anmeldenummer: 03101864.1
(22) Anmeldetag: 25.06.2003
(51) Int. Cl.: C04B 41/87, G01N 27/30

(54) **Verfahren zur Behandlung einer porösen Keramik**

(71) Anmelder: Mettler-Toledo GmbH, 8606 Greifensee (CH)
(72) Erfinder: Murer, Sacha, 6312, Steinhausen (CH)

(57) **Zusammenfassung**

Ein Verfahren zur Behandlung einer porösen Keramik umfasst die folgenden Schritte: Bereitstellen der porösen Keramik; Imprägnieren der porösen Keramik mit einem Lyogel-Vorläufer; und Überführen des Lyogel-Vorläufers in ein Lyogel. Ein Diaphragma, insbesondere für eine Bezugselektrode, umfasst einen Diaphragmakörper aus einer porösen Keramik. Die Keramik beinhaltet ein Hohlraumsystem, das mindestens teilweise mit einem Aerogel oder Lyogel befüllt ist.

## Beschreibung

### Technisches Gebiet

Die Erfindung betrifft ein Verfahren zur Behandlung einer porösen Keramik gemäss dem Oberbegriff des Anspruches 1 sowie ein Diaphragma gemäss dem Oberbegriff des Anspruches 10.

### Stand der Technik

Poröse Keramiken werden unter anderem zur Herstellung von Diaphragmen für elektrochemische Anwendungen, beispielsweise für Bezugselektroden verwendet. Insbesondere ist es bekannt, mit Hilfe eines Diaphragmas eine Verbindung zwischen einer Messlösung und einem in Inneren einer Bezugselektrode befindlichen Bezugselektrolyten zu schaffen. Eine derartige Verbindung weist einerseits eine gute elektrische Leitfähigkeit auf, wirkt aber andererseits als Barriere gegen eine unerwünschte Durchmischung von Messlösung und Bezugselektrolyt (siehe beispielsweise: H. Galster, "pH-Messung", VCH Verlagsgesellschaft (Weinheim) 1990, S. 83-84).

Für die Verwendung als Diaphragmen haben sich vor allem poröse Keramiken aus Porzellan, Aluminiumoxid, Spinell, Fosterit und insbesondere Zirkonia (hier verwendet als gängige Bezeichnung für Zirkon(IV)-oxid ZrO₂) bewährt. Als besonders vorteilhaft haben sich poröse Keramiken aus sogenannt "stabilisiertem Zirkonia" erwiesen, welches Calciumoxid ("Calcia") oder vorzugsweise Yttriumoxid ("Yttria") als stabilisierenden Zusatz enthält.

Stabilisiertes Zirkonia zeichnet sich durch eine gute chemische Korrosionsfestigkeit, insbesondere gegen alkalische Medien aus. Für viele Anwendung vorteilhaft ist zudem, dass der isoelektrische Punkt von stabilisiertem Zirkonia nahe bei pH 7 liegt. Des Weiteren ist stabilisiertes Zirkonia temperaturbeständig und hat einen thermischen Ausdehnungskoeffizienten ähnlich demjenigen von Weichgläsern; demnach können Diaphragmen aus stabilisiertem Zirkonia problemlos in Glasgehäuse von Bezugselektroden und dergleichen eingeschmolzen werden.

Die Herstellung von porösen Zirkonia-Keramiken erfolgt durch Extrudieren von nassen Oxidpasten mit nachfolgendem Trocknen und Brennen, oder aber durch isostatisches Pressen von Oxidpulvern mit nachfolgendem Brennen. Die gewünschte Porosität ergibt sich aufgrund der gewählten Teilchengrösse und durch Verwendung einer Brenntemperatur, bei der sich die im Rohling befindlichen Poren nicht vollkommen schliessen aber dennoch genügend Sinterung stattfindet, dass das Endprodukt eine ausreichende mechanische Festigkeit hat.

Es besteht ein Bedürfnis nach Diaphragmen, welche im Vergleich zu den bisher bekannten einen noch höheren Durchflusswiderstand bei nicht wesentlich verringerter elektrischer Leitfähigkeit aufweisen. Zu diesem Zweck wären poröse Keramiken erforderlich, die im Vergleich zu den bisher bekannten Keramiken wesentlich kleinere Poren bei ausreichendem Porenvolumen besitzen. Die Herstellung derartiger Keramiken durch Kontrolle des keramischen Rohmaterials und/oder der Brenntemperatur ist jedoch bislang nicht gelungen.

### Darstellung der Erfindung

Aufgabe der Erfindung ist es, ein verbessertes Verfahren zur Herstellung einer porösen Keramik anzugeben. Eine weitere Aufgaben der Erfindung besteht darin, ein verbessertes Diaphragma, insbesondere für eine Bezugselektrode anzugeben.

Gelöst werden diese Aufgaben durch das im Anspruch 1 definierte Verfahren sowie durch das im Anspruch 10 definierte Diaphragma.

Das erfindungsgemässe Verfahren beruht auf einer kontrollierten Porenverkleinerung einer porösen Keramik und umfasst die folgenden Schritte:
a) Bereitstellen der porösen Keramik;
b) Imprägnieren der porösen Keramik mit einem Lyogel-Vorläufer; und
c) Überführen des Lyogel-Vorläufers in ein Lyogel.

Als Ausgangsstoff dient dabei eine herkömmliche, gewünschtenfalls handelsübliche, poröse Keramik. Diese weist eine anfängliche Porosität auf, die sich durch das vorliegende Porengebilde, das heisst durch ein die Keramik durchdringendes Hohlraumsystem ergibt. Die bereitgestellte poröse Keramik wird anschliessend mit einem Lyogel-Vorläufer imprägniert, welcher in einem nächsten Verfahrensschritt in ein Lyogel überführt wird. Der Begriff "Lyogel" ist hier als Oberbegriff für eine Mehrzahl unterschiedlicher Gele zu verstehen, die je nach Art ihrer flüssigen Komponente unterschiedlich bezeichnet werden. Insbesondere fallen unter diesen Oberbegriff die wasserhaltigen "Aquagele" oder "Hydrogele" (siehe beispielsweise: J. Falbe, M. Regitz, Hsg., "Römpp Chemie Lexikon", Georg Thieme Verlag (Stuttgart) 1990, Band 2, S. 1511). Als Lyogel-Vorläufer kommen eigentliche Lösungen oder aber so genannte "Lyosole" in Frage, wobei analog zu obigen Begriffsbildungen die Vorläufer wasserhaltiger Aquagele als "Aquasole" bezeichnet werden.

Dadurch, dass die Hohlräume der porösen Keramik mindestens teilweise mit Lyogel befüllt werden, ergibt sich eine poröse Keramik mit verkleinerten Poren.

Das erfindungsgemässe Diaphragma, insbesondere für eine Bezugselektrode, umfasst einen Diaphragmakörper aus einer porösen Keramik, wobei die Keramik ein Hohlraumsystem beinhaltet, das mindestens teilweise mit einem Lyogel oder mit einem durch Umwandlung eines Lyogels gebildeten Aerogel befüllt ist. Insbesondere kann dabei ein Befüllungsgrad gewählt werden, der einer gewünschten Porengrösse entspricht.

Aufgrund der Tatsache, dass das Hohlraumsystem einer porösen Keramik in aller Regel eine Vielzahl von Kanälen und Hohlräumen unterschiedlicher Grösse aufweist, ist auch im vorliegenden Zusammenhang der Begriff der "Porengrösse" als ein Mass für eine Verteilung zu verstehen, die beispielsweise durch Mittelwert, Standardabweichung oder andere statistische Kennzahlen charakterisierbar ist. Entsprechend ist auch der Bergriff der "Porenverkleinerung" vor dem Hintergrund einer Verteilung zu verstehen.

Vorteilhafte Ausgestaltungen der Erfindung sind in den abhängigen Ansprüchen definiert.

Die Ansprüche 2 bis 9 beziehen sich auf bevorzugte Ausführungsformen des erfindungsgemässen Verfahrens, die Ansprüche 11 und 12 auf bevorzugte Ausgestaltungen des erfindungsgemässen Diaphragmas.

Gemäss Anspruch 2 ist als weiterer Vefahrensschritt vorgesehen, dass das aus dem Lyogel-Vorläufer gebildete Lyogel in ein Aerogel übergeführt wird, was durch Entfernen von Lösungsmittel aus dem Lyogel bewerkstelligt wird. Bei dieser Umwandlung bleibt das räumliche Gefüge der zunächst im Lyogel vorliegenden festen Komponente im wesentlichen erhalten, wobei das Lösungsmittel durch Luft oder allenfalls durch ein anderes Gas ersetzt wird. Dadurch, dass die Mikroporen der Keramik mindestens teilweise mit nanoporösem Aerogel befüllt werden, ergibt sich eine sehr feinporige Keramik. Erforderlichenfalls wird die Schrittfolge bestehend aus Imprägnieren der porösen Keramik mit einem Lyogel-Vorläufer, Überführen des Lyogel-Vorläufers in ein Lyogel und Überführen des Lyogels in eine Aerogel mehrmals durchlaufen, wobei mit jedem Durchgang eine weitere Porenverkleinerung herbeigeführt wird, bis zum Erreichen einer anwendungsspezifisch definierten Porenverkleinerung.

Vorzugsweise wird gemäss Anspruch 3 nach der Aerogel-Bildung eine Trocknung durchgeführt, indem die poröse Keramik einer Wärmebehandlung unterzogen wird. Dies ist insbesondere in all den Fällen angezeigt, in welchen nachträglich die Keramik - beispielsweise in Form eines Diaphragmas - in einen Elektrodenschaft oder dergleichen eingeschmolzen wird.

Grundsätzlich kann das Verfahren mit verschiedenen Arten von poröser Keramik durchgeführt werden. Gemäss Anspruch 4 werden Keramiken aus Zirkonia, insbesondere aus stabilisiertem Zirkonia verwendet, was vor allem für gewisse elektrochemische Anwendungen von Vorteil ist.

Es können verschiedene Arten von Lyogel-Vorläufern verwendet werden. Beispielsweise kann als Lyogel-Vorläufer ein Lyosol eingesetzt werden, wobei es sich gemäss Anspruch 5 insbesondere um eine stabilisierte wässrige Suspension von Nanopartikeln, ausgewählt aus der von Zirkonia, Zirkonia/Calcia und Zirkonia/Yttria gebildeten Gruppe, handelt. Alternativ kann der Lyogel-Vorläufer auch in Form einer Lösung zugeführt werden. Vorzugsweise wird gemäss Anspruch 6 als Lyogel-Vorläufer eine wässrige Zirkoniumlösung oder eine organische Zirkonylverbindung oder eine Zirkonverbindung in organischem Lösemittel verwendet.

Das Überführen des Lyogel-Vorläufers in das Lyogel wird gemäss Anspruch 7 durch eine Destabilisierung des Lyosols, beispielsweise durch eine Veränderung des pH-Wertes hervorgerufen. Besonders vorteilhaft ist dabei die im Anspruch 8 definierte Ausführungsform, wonach die Veränderung des pH-Wertes mittels einer Base vorgenommen wird. Erforderlichenfalls kann gemäss Anspruch 9 dem Lyogel-Vorläufer noch vor dem Imprägnieren der porösen Keramik ein Gelierungsmittel zugegeben werden, wodurch nach dem Imprägnieren die erwünschte Umwandlung des Lyogel-Vorläufers in das Lyogel hervorgerufen wird.

Gemäss Anspruch 11 ist das erfindungsgemässe Diaphragma vorzugsweise aus einer porösen Keramik aus Zirkonia, insbesondere stabilisiertem Zirkonia gebildet. Besonders vorteilhaft ist es zudem, wenn gemäss Anspruch 12 das Lyogel oder Aerogel aus Zirkonia gebildet ist.

### Wege zur Ausführung der Erfindung

Die Erfindung wird nachfolgend anhand von Ausführungsbeispielen näher beschrieben.

### Beispiel 1

Diaphragmastäbe aus porösem stabilisiertem Zirkonia mit Durchmesser 1.1 mm und Länge 100 mm wurden in eine Kristallisierschale gelegt. Danach wurde die Kristallisierschale mit Zirkonia-Sol gefüllt, so dass alle Diaphragmastäbe komplett eingetaucht waren. Anschliessend wurde die Kristallisierschale in einen Vakuum-Exsikkator gelegt und während 30 min die Luft aus den Diaphragmastäben ausgetrieben. Als Nächstes wurde der Exsikkator wieder belüftet und die Kristallisierschale mit Inhalt während 30 min stehen gelassen. Nach dieser Wartezeit wurden die Stäbe mit einer Pinzette aus der Kristallisierschale entnommen.

Ein Becherglas mit abgerundeter Öffnung wurde bereitgestellt und mit 100 ml konzentrierter wässriger Base befüllt. Anschliessend wurden die Diaphragmastäbe in das Becherglas gegeben. Danach wurde das Becherglas mit einem Uhrglas abgedeckt und das Ganze über Nacht stehen gelassen.

Am nächsten Morgen wurden die Diaphragmastäbe aus dem Becherglas genommen, auf einem Uhrglas in einen auf 80°C vorgeheizten Ofen gestellt und dort während 30 min getrocknet. Schliesslich wurden die Diaphragmastäbe in einen auf 500°C vorgeheizten Muffelofen gelegt und dort während 45 min stehen gelassen. Nach Entnahme aus dem Muffelofen wurde das Uhrglas mit den Diaphragmastäben während 3 Stunden abkühlen gelassen. Damit ist ein Verstopfungsvorgang abgeschlossen.

### Beispiel 2

Die im Beispiel 1 aufgeführten Schritte wurden wiederholt, das heisst mit Diaphragmastäben durchgeführt, die bereits einem oder mehreren Verstopfungsvorgängen unterzogen worden waren, bis zum Erreichen eines vorgegebenen Verstopfungsgrades. Beispielsweise wurden auf diese Weise ausgehend von Diaphragmastäben mit einem Porenvolumenanteil von 30 bis 40% und einer Gerüstdichte von ungefähr 5.8 g/cm³ Diaphragmastäbe mit einem auf die Hälfte verminderten Porenvolumenanteil von 15 bis 20% hergestellt aber kaum verminderter Gerüstdichte hergestellt.

### Beispiel 3

Die nachfolgende Tabelle zeigt einen Vergleich zwischen einem gemäss obigen Beispielen behandelten Diaphragma und einem unbehandelten Diaphragma.

**Tabelle:**

| Vergleich von unbehandeltem und behandeltem Diaphragma | | |
|---|---|---|
| | Unbehandeltes Diaphragma | Behandeltes Diaphragma |
| Wasser-Durchflussrate (g / 24 Std) bei einer Druckdifferenz von 5 bar | 1.5 - 2.0 | 0.2 - 0.4 |
| elektrischer Widerstand (kOhm) | 5 - 10 | 5 - 10 |
| Offene Porosität (%) | 20 - 38 | 15 - 20 |

Die obigen Ergebnisse zeigen, dass das behandelte Diaphragma zwar eine wesentlich geringere Wasserdurchflussrate als das unbehandelte Diaphragma aufweist, dass aber bezüglich des elektrischen Widerstandes kein Unterschied feststellbar ist. Mit anderen Worten zeichnet sich das behandelte Diaphragma durch einen höheren Strömungswiderstand bei nicht beeinträchtigter elektrischer Leitfähigkeit aus.

## Patentansprüche

1. Verfahren zur Behandlung einer porösen Keramik, **gekennzeichnet durch** die folgenden Schritte:
a) Bereitstellen der porösen Keramik;
b) Imprägnieren der porösen Keramik mit einem Lyogel-Vorläufer; und
c) Überführen des Lyogel-Vorläufers in ein Lyogel.

2. Verfahren nach Anspruch 1, **dadurch gekennzeichnet, dass** das Lyogel in ein Aerogel übergeführt wird.

3. Verfahren nach Anspruch 2, **dadurch gekennzeichnet, dass** nach der Aerogel-Bildung eine Trocknung durchgeführt wird.

4. Verfahren nach einem der Ansprüche 1 bis 3, **dadurch gekennzeichnet, dass** eine poröse Keramik aus Zirkonia, insbesondere aus stabilisiertem Zirkonia verwendet wird.

5. Verfahren nach einem der Ansprüche 1 bis 4, **dadurch gekennzeichnet, dass** als Lyogel-Vorläufer eine wässrige Suspension von Nanopartikeln, ausgewählt aus der von Zirkonia, Zirkonia/Calcia und Zirkonia/Yttria gebildeten Gruppe, verwendet wird.

6. Verfahren nach einem der Ansprüche 1 bis 4, **dadurch gekennzeichnet, dass** als Lyogel-Vorläufer eine wässrige Zirkoniumlösung oder eine organische Zirkonylverbindung oder eine Zirkonverbindung in organischem Lösemittel verwendet wird.

7. Verfahren nach einem der Ansprüche 1 bis 6, **dadurch gekennzeichnet, dass** das Überführen des Lyogel-Vorläufers in das Lyogel durch eine Veränderung des pH-Wertes hervorgerufen wird.

8. Verfahren nach Anspruch 7, **dadurch gekennzeichnet, dass** die Veränderung des pH-Wertes mittels einer Base vorgenommen wird.

9. Verfahren nach einem der Ansprüche 1 bis 8, **dadurch gekennzeichnet, dass** man dem Lyogel-Vorläufer vor dem Imprägnieren der porösen Keramik ein Gelierungsmittel zugibt.

10. Diaphragma, insbesondere für eine Bezugselektrode, umfassend einen Diaphragmakörper aus einer porösen Keramik, **dadurch gekennzeichnet, dass** die Keramik ein Hohlraumsystem beinhaltet, das mindestens teilweise mit einem Aerogel oder Lyogel befüllt ist.

11. Diaphragma nach Anspruch 10, **dadurch gekennzeichnet, dass** die Keramik aus Zirkonia, insbesondere stabilisiertem Zirkonia gebildet ist.

12. Diaphragma nach Anspruch 10 oder 11, **dadurch gekennzeichnet, dass** das Aerogel oder Lyogel aus Zirkonia gebildet ist.
